# EUROPEAN PATENT APPLICATION

(11) **EP 4 800 801 A1**
(43) Date of publication of application: **02.09.2026**
(21) Application number: 25160985.5
(22) Date of filing: 28.02.2025
(51) Int. Cl.: H01M 10/42, H01M 50/258

(54) **REPAIR KIT AND METHOD FOR REPLACING A SUBMODULE IN BATTERY**

(71) Applicant: ZF Friedrichshafen AG, 88046 Friedrichshafen (DE)
(72) Inventor: WIERUSZEWSKI, Filip, 51-009 Wroclaw (PL); NYCZ, Karol, 51-511 Wroclaw (PL)
(74) Representative: ZF Friedrichshafen AG

(57) **Abstract**

The present invention relates to a repair kit (30) for replacing a submodule of a battery (10). The submodule comprises at least one cell and an electrical interface configured for connecting with a battery management system (24). The repair kit (30) comprises at least one cell and an electrical interface configured for connecting with the battery management system (24). The repair kit (30) is configured to mimic the behavior of the submodule replaced in the battery (10) for the battery management system (24). The invention also relates to a method for replacing a submodule of a battery (10).

## Description

The present invention relates to a battery repair kit for replacing a submodule of a battery, such as a traction battery of a vehicle. The invention further relates to a method for replacing a submodule of a battery.

### Prior art

Batteries usually comprise a plurality of cells, often grouped together in several units. The individual cells may wear unevenly during use, or single cells may experience sudden failure. This may cause a battery to have a lowered capability to retain charge, provide less than the intended voltage or not provide any power due to ageing. The battery may thus be unsuitable or less suitable for the intended use due to its overall state of health despite the majority of its components still being in good condition and having a high remaining lifetime.

Since battery manufacturing is expensive and requires a lot of rare resources, there is thus a need to repair such batteries. However, this usually requires replacement of the damaged parts with identical parts to ensure the battery remains functional or regains functionality. This often renders users of batteries dependent on the original manufacturer of a battery. Replacement parts may thus be expensive. In addition, technological improvements cannot be implemented when repairing a battery, which could otherwise contribute to cost reductions and performance increases. Further, original parts may not even be available anymore once a battery has aged sufficiently to require repair.

### Summary of the invention

A first aspect of the invention relates to a repair kit for a battery. The battery may be configured as a traction battery for a vehicle. The battery may be a vehicle battery, for example a traction, such as for a car, ship or aircraft. The battery may also be part of a household appliance, a mobile device, or a stationary energy storage device for the power grid or intended for some other industrial appliance. The battery may be configured for charging, storing and supply of electric energy. The battery may contain one or more cells, such as Lithium-Ion or acid-lead cells. A cell may be, for example, configured as a prismatic or pouch cell. The battery may comprise a battery management system or may be controlled by a battery management system external to the battery. The battery may comprise a heat management system, for example including active or passive cooling. The battery may comprise a housing in which the cells and, alternatively or additionally, the battery management system is contained. The housing may be configured for mounting in a specific device, such as a car. The battery may comprise one or more connections, such as a plug or socket, for connecting a power supply for recharging by a power grid and for connecting to an electrical consumer.

The repair kit is configured for replacing a submodule of the battery. The submodule comprises at least one cell and an electrical interface configured for connecting with the battery management system. The submodule may comprise a frame and alternatively or additionally a sub-housing. The electrical interface may comprise one or more plugs or sockets that electrically connect the submodule to the rest of the battery. The submodule may also comprise a mechanical interface, for example configured for mounting the submodule to the rest of the battery. When replacement of the submodule is planned, a state of health of the submodule may have degraded beyond a threshold. The submodule that the repair kit will replace may be configured as an original submodule of the battery. The submodule may comprise one or several cells, cell groups or cell modules.

The repair kit comprises at least one cell and an electrical interface configured for connecting with the battery management system. The at least one cell and the electrical interface may be part of a replacement submodule. The repair kit may comprise the replacement submodule. The replacement submodule may comprise a frame and alternatively or additionally a sub-housing. The electrical interface of the repair kit may comprise one or more plugs or sockets that electrically connect the submodule to the rest of the battery in place of the replaced submodule. The electrical interface may connect the repair kit to the rest of the battery for power supply or only for battery management. The replacement submodule may also comprise a mechanical interface, for example configured for mounting the replacement submodule to the rest of the battery in place of the replaced submodule. The repair kit, such as its replacement submodule, may comprise one or several cells, cell groups or cell modules. The repair kit may comprise parts in addition to the replacement submodule, such as adaptors.

The repair kit is configured to mimic the behavior of the submodule replaced in the battery for the battery management system. The repair kit may be configured to mimic the behavior of the submodule replaced in the battery for the whole battery. Specifically, the replacement submodule may be configured to mimic the behavior of the submodule. The mimicking may be achieved by passive and, additionally or alternatively, active components, for example by programming of a control device of the repair kit, by selection of appropriate cells, resistors and, additionally or alternatively, configuring an internal interconnection between parts appropriately. The mimicking can comprise one or several properties of the replaced submodule relevant or even essential to the correct operation of the battery. Mimicking can mean that certain or all behaviors of the replacement submodule are identical or similar to the replaced submodule. For example, the behavior may be similar enough and the properties elected so that overall battery behavior is unchanged and alternatively or additionally the battery management system does not recognize that the submodule replaced by the repair kit is different to the original one. For example, such a configuration may prevent the battery management system from giving an error message with the replacement submodule installed in the battery instead of original parts.

Due to the mimicking, the repair kit allows replacement of submodules in a battery without a non-original submodule that may also be structurally and electrically different. Moreover, no modifications to the battery management system may be required. This allows incorporating technological advances when repairing a battery or conducting maintenance on a battery with the repair kit. Cost-efficient repair of batteries is thus made accessible with high reliability even beyond the originally intended life cycle of a certain battery type.

According to an embodiment, the repair kit comprises a control device configured to simulate the behavior of the submodule replaced in the battery for the battery management system. The control device may be connected to the at least one cell. The control device may be connected to the electrical interface. The control device may be configured to connect respective cells with the electrical interface. The control device may be programmable, for example to adapt the repair kit to different types of batteries. The control device may comprise a microprocessor. The control device may be configured as a battery management system for the kit, such as for the replacement module. The control device may electronically change the properties of the replacement module. For example, the control device may limit a maximum charge, may change a charging behavior, such as by adapting a charging curve, a discharging behavior, such as by adapting a discharging curve, a thermal behavior, nominal currents and alternatively or additionally nominal voltages of the replacement submodule to simulate these properties to mimic those of the submodule replaced in the battery. Correspondingly, even if a higher performance than in the original submodule of any of these properties is physically available in the replacement submodule, their performance may be easily reduced to achieve compatibility with the original battery management system. This might be supported by passive components, such as by selectable resistors in the battery repair kit, to facilitate mimicking of the original parts.

Selected behaviors and overall properties of the replacement provided by the repair kit may be different to the submodule to be replaced, for example, in case the battery management system accepts those properties. For example, the repair kit may provide higher capacity cells so that an overall maximum charge, at least in the replaced submodule, may be higher than originally designed. This allows to take advantage of technological improvements to increase battery performance.

According to an embodiment, the repair kit is structurally different to the submodule replaced in the battery. For example, the replacement submodule may be structurally different. Only certain properties may be different, such as an internal architecture, electrical interconnections, any cells, a cell configuration, mechanical and electrical connections, electrical components and a temperature management design.

According to an embodiment, the repair kit is configured to provide signals to the battery management system in the same form as the submodule replaced in the battery. For example, the encoding, frequency, amplitude and alternatively or additionally format of any transmitted signal may be identical or similar to those signals provided by the submodule replaced in the battery. For example, the signals may be similar enough so that overall battery behavior is unchanged and alternatively or additionally the battery management system does not recognize that the submodule replaced by the repair kit is different to the original one. The signals may indicate a state of the submodule. The signals may comprise sensor signals.

According to an embodiment, the repair kit is configured to provide signals to other systems of the battery in the same form as the submodule replaced in the battery. For example, the replaced submodule may communicate with other submodules or battery systems in an identical or similar way as the submodule replaced in the battery. For example, other systems may be other submodules or a cooling system.

According to an embodiment, the electrical interface of the repair kit is configured to electrically connect to the battery management system in the same manner as the submodule replaced in the battery. For example, the electrical interface may have the same pins and use those pins for the same signals. Additionally, a geometric design of the electrical interface may be identical or similar at least in the interface region, allowing to connect to the same sockets or plugs. The repair kit may comprise electrical adapters to adjust the repair kit to different electrical interfaces in different battery types.

According to an embodiment, the repair kit has a mechanical interface configured for attachment of the repair kit to the battery in the same manner as the submodule replaced in the battery. For example, the mechanical interface may be identical or similar to the mechanical interface of the submodule replaced in the battery. For example, the mechanical interface may comprise through holes for screwing, clamp engagement areas, abutment surfaces and other parts and sections for allowing the replacement submodule to be fastened to the battery in the same fashion as the submodule replaced in the battery. The repair kit may comprise mechanical adapters to adjust the repair kit to different mechanical interfaces in different battery types.

According to an embodiment, the repair kit mimics at least one performance parameter as a property of the submodule replaced in the battery. The performance parameters may comprise a voltage, a current, charging and discharging curves and additionally or alternatively thermal properties. Each performance parameter may be identical or similar to that of one of the submodules replaced in the battery, for example, under regular and extreme loads.

Alternatively or additionally, the repair kit mimics a behavior under load as a property of the submodule replaced in the battery. The replacement submodule may thus behave under operating requirements in the same way as the original module.

Alternatively or additionally, the repair kit mimics communication as a property of the submodule replaced in the battery. For example, the replacement submodule may thus receive and transmit information while operating in the battery in the same way as the original module.

A second aspect relates to a method for replacing a submodule of a battery. The method may use the repair kit according to the first aspect. Embodiments, examples and features of the first aspect may constitute embodiments, examples and features of the second aspect and vice-versa.

The method comprises a step of removing a submodule, for example, a submodule with an insufficient state of health. In a previous step, such a submodule may be identified in the battery. The removal may comprise a disconnection of any mechanical and additionally or alternatively electrical interfaces of the submodule to be removed.

The method comprises the step of providing a repair kit that is configured to mimic the behavior of the removed submodule in the battery for a battery management system. The repair kit may comprise a replacement submodule. The repair kit may be configured as previously described. Before replacement, adapters may be selected and mounted. The method may comprise a step of programming a control device to achieve mimicking of the submodule to be replaced. The method may comprise a step of selecting of cells, adjusting electrical interconnections and additionally or alternatively adjusting resistors in the replacement submodule.

The method comprises the step of replacing the submodule in the battery with the repair kit, for example with a replacement submodule provided for that purpose. The step of replacing may comprise an insertion and connecting mechanical and electrical interfaces of the replacement submodule.

### Brief description of the figures

Fig. 1 schematically illustrates the components of a traction battery for a motor vehicle in an exploded view.
Fig. 2 schematically illustrates the replacement of a submodule of the battery of Fig. 1.

### Detailed description of embodiments

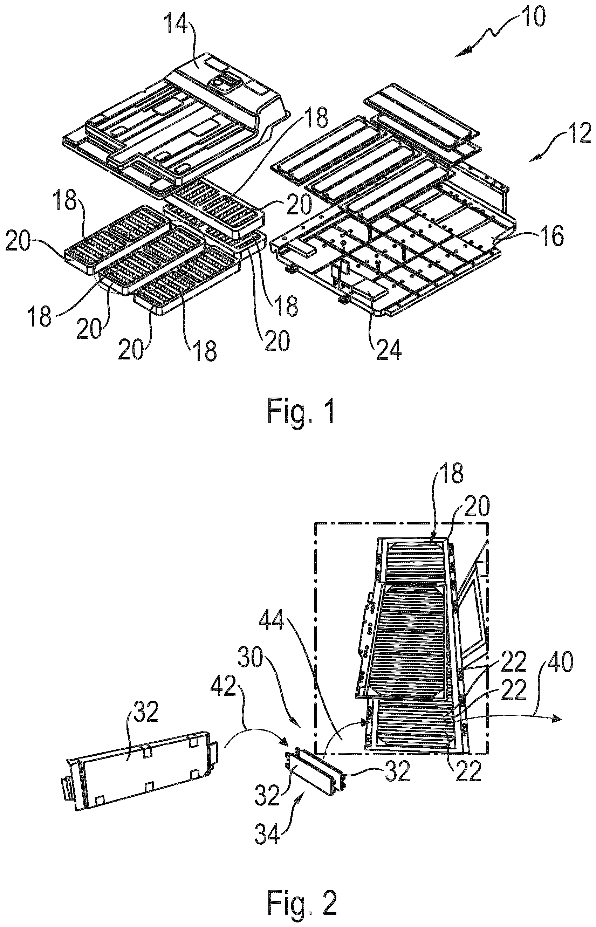

Fig. 1 illustrates a traction battery 10 that is configured to power a drive unit of a motor vehicle in an exploded view. The battery 10 comprises a housing 12 with an upper shell 14 and a lower shell 16. Within those housing 12, five modules 18 with a row of cells 22 are arranged and mounted to a frame 20. The cells 22 are each grouped together as a group of two or three cells. The cells 22 and the modules 18 are electrically interconnected to provide electric power to the vehicle. The battery 10 further includes a battery management system 24 that is also arranged within the housing 12.

During use, the battery 10 ages and the capability of individual cells 22, cell groups or modules 18 to retain charge may degrade. Further, single cells 22, cell groups or modules 18 may fail, rendering the battery 10 inoperable. Other cells 22, cell groups or modules 18 may lose the capability to sufficiently retain charge and remain functional. It can therefore be cost-effective to only exchange certain cells 22, cell groups or modules 18 when repairing the battery 10.

Fig. 2 illustrates such a repair with a battery repair kit 30. In a first step, submodules of the battery 10 are identified that should be exchanged. Such a submodule may be an individual cell, a group of cells or a whole module 18 of the battery 10. In the presently shown example, a state of health of only a group of cells has been identified as having deteriorated under a predetermined threshold. Correspondingly, the module 18 with its frame 20 has been removed from the housing 12 of the battery 10, as shown in Fig. 2. In a second step 40, the group of cells with the individual three cells 22 belonging to this group are removed as a submodule from the module 18. For this purpose, the cells 22 are unscrewed from the frame 20 to disconnect a mechanical interface. Further, the cells 22 are disconnected from any electrical connection to the rest of the battery 10 and its battery management system 24 by disconnecting an electrical interface, in the present example by unplugging connections. An arrow illustrates the removal step 40 in Fig. 2.

In a further step 42 and as illustrated by an arrow, the repair kit 30 is provided. The repair kit 30 comprises a group of cells with two individual replacement cells 32 that form a replacement submodule 34 for the removed submodule in the respective module 18 of the battery 10. In the present example, the repair kit 30 comprises the exact amount of replacement cells 32 needed to form the replacement submodule 34. In other embodiments, the repair kit 30 may contain additional replacement cells 32 or submodules that can be used to replace further parts of the same or a different battery 10.

The replacement cells 32 are connected with each other to form the replacement submodule 34. As can be taken, the replacement group of cells contain fewer replacement cells 32 than the original submodule that is replaced in the battery 10. Nevertheless, the repair kit 30 provided and the replacement group of cells are configured to mimic the behavior of the submodule replaced in the battery 10 for the battery management system 24. For this purpose, the two replacement cells 32 in the replacement submodule 34 may have the same nominal performance characteristics as the three original cells 22. Alternatively or additionally, the replacement submodule 34 comprises a control device that simulates the behavior of the replaced group of cells with a correspondingly programmed software. Further, the replacement submodule 34 may communicate with the battery management system 24 in the same manner and the electrical and mechanical interfaces for mounting and electrically connecting the replacement submodule 34 allow the use of original interfaces in the battery 10.

In a further step 44 and again illustrated with an arrow, the submodule is replaced in the battery 10 with the repair kit 30. For this purpose, the replacement submodule 34 is inserted into the frame 20 and mechanically fastened thereto by the screws previously used to attach the replaced group of cells or screws contained in the repair kit 30. Further, the replacement submodule 34 is connected with its electrical interface to the electrical connections previously connected to the submodule replaced in the battery 10. Afterwards, the module 18 with the replacement cells 32 is reinserted into the housing 12. No modification of the battery management system 24 is needed. The replacement submodule 34 acts as a black box that mimics an original part, so no adaptation of the rest of the battery 10 and reprogramming of the battery management system 24 is required despite internal components being different.

### Reference signs

- 10: battery
- 12: housing
- 14: upper shell
- 16: lower shell
- 18: module
- 20: frame
- 22: cells
- 24: battery management system
- 30: repair kit
- 32: replacement cells
- 34: replacement submodule
- 40: removal step
- 42: step of providing repair kit
- 44: step of replacing submodule

## Claims

1. Repair kit (30) for replacing a submodule of a battery (10), wherein the submodule comprises at least one cell and an electrical interface configured for connecting with a battery management system (24), wherein the repair kit (30) comprises at least one cell and an electrical interface configured for connecting with the battery management system (24), wherein the repair kit (30) is configured to mimic the behavior of the submodule replaced in the battery (10) for the battery management system (24).

2. Repair kit (30) according to claim 1, **characterized in that** the repair kit (30) comprises a control device configured to simulate the behavior of the submodule replaced in the battery (10) for the battery management system (24).

3. Repair kit (30) according to claim 1 or 2, **characterized in that** the repair kit (30) is structurally different to the submodule replaced in the battery (10).

4. Repair kit (30) according to any one of the preceding claims, **characterized in that** the repair kit (30) is configured to provide signals to the battery management system (24) in the same form as the submodule replaced in the battery (10).

5. Repair kit (30) according to any one of the preceding claims, **characterized in that** the repair kit (30) is configured to provide signals to other systems of the battery (10) in the same form as the submodule replaced in the battery (10).

6. Repair kit (30) according to any one of the preceding claims, **characterized in that** the electrical interface of the repair kit (30) is configured to electrically connect to the battery management system (24) in the same manner as the submodule replaced in the battery (10).

7. Repair kit (30) according to any one of the preceding claims, **characterized in that** the repair kit (30) has a mechanical interface configured for attachment of the repair kit (30) to the battery (10) in the same manner as the submodule replaced in the battery (10).

8. Repair kit (30) according to any one of the preceding claims, **characterized in that** the repair kit (30) mimics at least one of the following properties of the submodule replaced in the battery (10):
- Performance parameters;
- Behavior under load; and
- Communication.

9. Method for replacing a submodule of a battery (10), the method comprising at least the following steps:
- Removal (40) of the submodule;
- Providing (42) a repair kit (30) that is configured to mimic the behavior of the removed submodule in the battery (10) for a battery management system (24);
- Replacing (44) the submodule in the battery (10) with the repair kit (30).
